# FASCICULE DE BREVET EUROPEEN

(11) **EP 1 790 532 B1**
(45) Date de publication et mention de la délivrance du brevet: **27.05.2009**
(21) Numéro de dépôt: 06291830.5
(22) Date de dépôt: 28.11.2006
(51) Int. Cl.: B60R 13/08

(54) **Ecran d'insonorisation à zone d'appui intégrée pour moteur de véhicule automobile et son procédé de fabrication**
Geräuschdämmungsschild mit integrierter Befestigungszone
Sound insulating shield with integrated latching zone

(30) Priorité: 29.11.2005 FR 0512143
(43) Date de publication de la demande: 30.05.2007
(73) Titulaire: Centre d'etude et de recherche pour l'automobile (CERA), 51100 Reims (FR)
(72) Inventeur: Lanfranchini, Jean-Luc, 51100 Reims (FR)
(74) Mandataire: Sayettat, Julien Christian

(56) Documents cités:
- EP-A- 0 262 092
- FR-A- 2 821 789
- US-A- 4 288 490
- US-A- 5 744 763

## Description

L'invention concerne un écran d'insonorisation pour moteur de véhicule automobile, un procédé de réalisation d'un tel écran et un véhicule comprenant un tel écran.

Il est connu de réaliser un écran d'insonorisation disposé entre le capot et le moteur d'un véhicule automobile, ledit écran comprenant une paroi, par exemple en matière plastique rigide, recouverte éventuellement d'une couche de matériau absorbant tel qu'une mousse ou un feutre.

Afin de permettre le maintien et le découplage d'un tel écran, ce dernier est fixé au moteur ou à la structure du véhicule par l'intermédiaire de plots élastiques, par exemple à base d'élastomère, l'écran n'étant pas en contact avec le moteur, un jeu étant prévu entre l'écran et le moteur.

La présence d'un tel jeu crée des fuites acoustiques préjudiciables en terme d'efficacité de la protection acoustique.

Par ailleurs, l'accrochage au moyen de plots complexifie l'opération de montage et entraîne des surcoûts.

En outre, les normes en vigueur, relatives à la protection des piétons en cas de choc contre le capot, requièrent de laisser un espace important, de l'ordre de 50 à 70 mm par exemple, entre le capot et tout élément rigide disposé en dessous, et en particulier un écran tel que décrit ci-dessus. La présence du jeu tel que décrit avant va à l'encontre de telles exigences, sinon au prix d'un rehaussement du capot.

On connait du document US-5 744 763 un écran d'insonorisation selon le préambule de la revendication 1.

L'invention a pour but de pallier ces inconvénients en proposant un écran permettant de minimiser les fuites acoustiques, de supprimer l'utilisation de plots de découplage et d'agrandir l'espace entre le capot et l'écran pour répondre aux normes de sécurité en cas de choc d'un piéton.

A cet effet, et selon un premier aspect, l'invention propose un écran d'insonorisation selon la revendication 1.

Les fuites acoustiques du bruit issu du moteur sont ainsi minimisées, puisque l'écran est posé sur le moteur. En outre, l'utilisation de plots de découplage est inutile, puisque l'écran repose sur le moteur sur au moins une zone d'appui d'élasticité propre à assurer la fonction de découplage. Enfin, l'espace entre le capot et l'écran est agrandi, ce qui permet de répondre aux normes de sécurité en cas de choc d'un piéton.

Dans cette description, les termes de positionnement dans l'espace (supérieur, inférieur,...) sont pris en référence à l'écran disposé dans le véhicule.

Selon un deuxième aspect, l'invention propose un procédé de réalisation d'un tel écran, comprenant les étapes suivantes :
- disposer dans la matrice d'un moule de compression à chaud une couche étanche revêtue d'une couche élastique, au moins ladite couche élastique étant portée à une température permettant sa conformation à la géométrie de l'écran à obtenir,
- réaliser une compression de l'ensemble de sorte à former au moins une zone d'appui présentant un module d'élasticité dynamique inférieur à 1daN/cm²,
- après refroidissement, réaliser un démoulage de l'écran obtenu.

Un tel procédé, dont les étapes 1 et 3 sont connues des documents US 5 744 763, permet de former l'écran à la géométrie attendue en une seule étape, ce qui est avantageux en termes de simplification du processus de fabrication et de coût.

En outre, un tel procédé permet, par compression différenciée selon les zones de l'écran, d'obtenir une variation de la raideur de l'écran. Notamment, l'écran peut être rendu très rigide, par compression renforcée, en regard de zones de non appui où il peut être nécessaire de garantir un espacement suffisant entre le moteur et l'écran, par exemple au niveau des injecteurs.

Selon un troisième aspect, l'invention concerne un véhicule comprenant un moteur présentant une surface supérieure, un capot et un tel écran, ledit écran étant monté au voisinage dudit moteur et à distance dudit capot, ledit écran comprenant au moins une zone d'appui de la couche élastique, de module d'élasticité dynamique inférieur à 1daN/cm², en contact avec ladite surface supérieure et au moins une zone d'espacement de ladite couche élastique où ladite couche élastique est à distance de ladite surface supérieure.

De la sorte, l'écran est en appui sur le moteur, sur au moins une zone d'appui d'élasticité appropriée, sans le recours à des plots de découplage. En outre, la présence d'au moins une zone d'espacement permet de garantir le non contact entre l'écran et moteur à l'aplomb de ladite zone d'espacement.

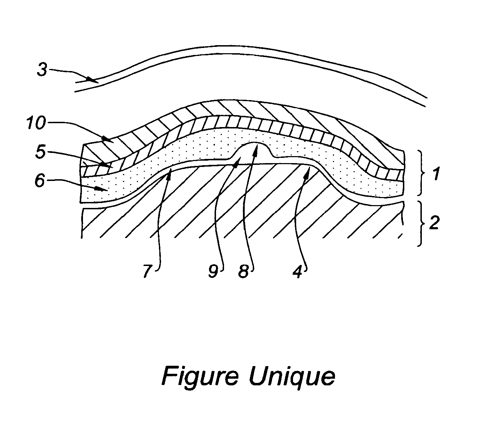

D'autres particularités et avantages de l'invention apparaîtront dans la description qui suit, faite en référence à la figure jointe représentant une coupe schématique d'un écran selon un mode de réalisation de l'invention, ledit écran étant montré espacé de la surface supérieure d'un moteur de véhicule automobile et sous le capot du véhicule.

En référence à la figure, on décrit à présent un écran d'insonorisation 1 destiné à être disposé sur la surface supérieure 4 d'un moteur 2 de véhicule automobile, au voisinage dudit moteur et à distance du capot 3 du véhicule, ledit écran comprenant au moins une couche supérieure étanche 5 disposée contre une couche inférieure élastique 6, ladite couche élastique comprenant au moins une zone d'appui 7 présentant un module d'élasticité dynamique inférieur à 1daN/cm², ladite zone d'appui étant agencée pour pouvoir reposer sur au moins une zone de la surface supérieure dudit moteur.

Selon une réalisation, l'écran 1 comprend en outre au moins un logement 8, formé dans la couche élastique 6, destiné à former une zone d'espacement 9 entre ladite couche élastique et la surface supérieure 4 du moteur. La présence d'une telle zone d'espacement 9 permet de garantir localement une absence de contact entre la couche élastique 6 et le moteur 2, ce qui est particulièrement recherché lorsque la partie de moteur 2 disposé en regard de la zone d'espacement 9 est formée par exemple par les injecteurs. En variante non représentée, la zone d'espacement 9 peut être formée en l'absence de logement 8, ceci du fait de l'existence d'une concavité de la surface supérieure 4.

Selon une réalisation, l'écran 1 comprend en outre une couche de rigidification 10 associée à la couche étanche 5 à l'opposé de la couche élastique 6. Une telle couche de rigidification 10 permet d'apporter la rigidité attendue à l'écran 1 lorsque la couche étanche 5 ne présente pas une rigidité suffisante.

La couche de rigidification 10 peut être obtenue par compression à chaud et présenter par exemple un module de Young compris entre 100 et 4000 MPa.

Selon une réalisation, la couche de rigidification 10 est à base de feutre de verre ou de coton, de masse surfacique comprise entre 400 et 1200 g/m² et d'épaisseur comprise entre 2 et 6 mm, de sorte à lui conférer une rigidité suffisante.

Selon une réalisation, la couche élastique 6 et/ou la couche de rigidification 10 comprend une sous-couche de protection, telle qu'un non-tissé non représenté, de masse surfacique comprise entre 15 et 200 g/m².

Selon une réalisation, la sous-couche de protection de la couche élastique 6 présente une résistance au passage de l'air inférieure à 1000 N.m⁻³.s, de sorte à permettre un passage des ondes acoustiques issues du moteur 2 vers ladite couche élastique et leur absorption lorsque ladite couche élastique est poreuse.

Selon diverses réalisations, la couche étanche 5 est à base de EPDM (éthylène propylène diène monomère) ou de EVA (éthyle vinyle acétate) chargé avec une charge minérale, de bitume ou de matériau métallique, par exemple à base de feuille d'aluminium, ladite couche présentant une masse surfacique comprise entre 50 et 10 000 g/m². Certaines de ces réalisations requièrent, lorsque la rigidité de la couche étanche est insuffisante, l'adjonction de la couche de rigidification 10 précédemment décrite.

Selon une réalisation, la couche élastique 6 est à base de feutre de verre ou de coton de masse surfacique comprise entre 400 et 1400 g/m² ou de mousse élastique de masse volumique comprise entre 10 et 100 kg/m³.

Un procédé de réalisation d'un écran 1 selon l'invention peut comprendre les étapes suivantes :
- disposer dans la matrice d'un moule de compression à chaud une couche étanche 5 revêtue d'une couche élastique 6, au moins ladite couche élastique étant portée à une température permettant sa conformation à la géométrie de l'écran 1 à obtenir,
- réaliser une compression de l'ensemble de sorte à former au moins une zone d'appui 7 présentant un module d'élasticité dynamique inférieur à 1daN/cm²,
- après refroidissement, réaliser un démoulage de l'écran 1 obtenu.

Le démoulage peut être suivi d'une découpe périphérique permettant d'obtenir l'écran 1 dans sa forme définitive.

Selon une réalisation, le procédé comprend en outre l'étape de disposer une couche de rigidification sous la couche étanche, ladite couche de rigidification étant portée à une température permettant sa conformation à la géométrie de l'écran à obtenir.

La présence d'une telle couche de rigidification 10 est particulièrement appropriée lorsque la couche étanche 5 ne présente pas la rigidité requise.

Selon une réalisation, la couche étanche 5 est plaquée par tirage sous vide contre la couche de rigidification 10 lors de l'étape de compression, ce qui permet d'assurer une compression importante de la couche de rigidification 10, et donc de lui conférer la rigidité attendue.

La couche de rigidification 10 permet en outre d'isoler la couche étanche 5 de la matrice du moule, ce qui peut permettre d'améliorer le démoulage lorsque ladite couche étanche est par exemple à base de EPDM.

On décrit à présent un véhicule comprenant un moteur 2 présentant une surface supérieure 4, un capot 3 et un écran 1, ledit écran étant monté au voisinage dudit moteur et à distance dudit capot, ledit écran comprenant au moins une zone d'appui de la couche élastique 6, de module d'élasticité dynamique inférieur à 1daN/cm², en contact avec ladite surface supérieure et au moins une zone d'espacement 9 de ladite couche élastique où ladite couche élastique est à distance de ladite surface supérieure.

## Revendications

1. Ecran d'insonorisation (1) destiné à être disposé sur la surface supérieure (4) d'un moteur (2) de véhicule automobile, au voisinage dudit moteur et à distance du capot (3) du véhicule, ledit écran comprenant au moins une couche supérieure étanche (5) disposée contre une couche inférieure élastique (6), ladite couche élastique comprenant au moins une zone d'appui (7) ledit écran étant **caracterisé en ce que** ladite zone d'appui présente un module d'élasticité dynamique inférieur à 1daN/cm² et **en ce que**, ladite zone d'appui est agencée pour pouvoir reposer sur au moins une zone de la surface supérieure (4) dudit moteur.

2. Ecran selon la revendication 1, **caractérisé en ce qu'**il comprend en outre au moins un logement (8), formée dans la couche élastique (6), ledit logement étant destiné à former une zone d'espacement (9) entre ladite couche élastique et la surface supérieure (4) du moteur.

3. Ecran selon la revendication 1 ou 2, **caractérisé en ce qu'**il comprend en outre une couche de rigidification (10) associée à la couche étanche (5) à l'opposé de la couche élastique (6).

4. Ecran selon la revendication 3, **caractérisé en ce que** la couche de rigidification (10) est à base de feutre de verre ou de coton, de masse surfacique comprise entre 400 et 1200 g/m² et d'épaisseur comprise entre 2 et 6 mm.

5. Ecran selon l'une quelconque des revendications 1 à 4, **caractérisé en ce que** la couche élastique (6) et/ou la couche de rigidification (10) comprend une sous-couche de protection, telle qu'un non-tissé, de masse surfacique comprise entre 15 et 200 g/m².

6. Ecran selon la revendication 5, **caractérisé en ce que** la sous-couche de protection de la couche élastique (6) présente une résistance au passage de l'air inférieure à 1000 N.m⁻³.s.

7. Ecran selon l'une quelconque des revendications 1 à 6, **caractérisé en ce que** la couche étanche (5) est à base de EPDM ou de EVA chargé avec une charge minérale, de bitume ou de matériau métallique, ladite couche présentant une masse surfacique comprise entre 50 et 10 000 g/m².

8. Ecran selon l'une quelconque des revendications 1 à 7, **caractérisé en ce que** la couche élastique (6) est à base de feutre de verre ou de coton de masse surfacique comprise entre 400 et 1400 g/m² ou de mousse élastique de masse volumique comprise entre 10 et 100 kg/m³.

9. Procédé de réalisation d'un écran (1) selon l'une quelconque des revendications précédentes, **caractérisé en ce qu'**il comprend les étapes suivantes :
● disposer dans la matrice d'un moule de compression à chaud une couche étanche (5) revêtue d'une couche élastique (6), au moins ladite couche élastique étant portée à une température permettant sa conformation à la géométrie de l'écran (1) à obtenir,
● réaliser une compression de l'ensemble de sorte à former au moins une zone d'appui (7) présentant un module d'élasticité dynamique inférieur à 1daN/cm²,
● après refroidissement, réaliser un démoulage de l'écran (1) obtenu.

10. Procédé selon la revendication 9, lorsqu'elle dépend de la revendication 3, **caractérisé en ce qu'**il comprend en outre l'étape de disposer une couche de rigidification (10) sous la couche étanche (5), ladite couche de rigidification étant portée à une température permettant sa conformation à la géométrie de l'écran (1) à obtenir.

11. Procédé selon la revendication 10, **caractérisé en ce que** la couche étanche (5) est plaquée par tirage sous vide contre la couche de rigidification (10) lors de l'étape de compression.

12. Véhicule comprenant un moteur (2) présentant une surface supérieure (4), un capot (3) et un écran (1) selon l'une quelconque des revendications 1 à 8, ledit écran étant monté au voisinage dudit moteur et à distance dudit capot, ledit écran comprenant au moins une zone d'appui de la couche élastique (6), de module d'élasticité dynamique inférieur à 1daN/cm², en contact avec ladite surface supérieure et au moins une zone d'espacement (9) de ladite couche élastique où ladite couche élastique est à distance de ladite surface supérieure.

## Claims

1. Soundproofing screen (1) intended to be arranged on the upper surface (4) of an engine (2) of an automobile vehicle, in the vicinity of said engine and at a distance from the bonnet (3) of the vehicle, said screen comprising at least one sealed upper layer (5) arranged against an elastic lower layer (6), said elastic layer comprising at least one support zone (7), said screen **characterised in that** said support zone has a dynamic elasticity module less than 1daN/cm² and **in that** said support zone is arranged in order to be able to rest on at least one zone of the upper surface (4) of said engine.

2. Screen set forth in claim 1, **characterised in that** it further comprises at least one housing (8), formed in the elastic layer (6), said housing being intended to form a spacing zone (9) between said elastic layer and the upper surface (4) of the engine.

3. Screen set forth in claim 1 or 2, **characterised in that** it further comprises a rigidification layer (10) associated to the sealed layer (5) opposite from the elastic layer (6).

4. Screen set forth in claim 3, **characterised in that** the rigidification layer (10) is of a cotton or glass felt base, of surface density between 400 and 1200 g/m² and thickness between 2 and 6 mm.

5. Screen as set forth in any of claims 1 to 4, **characterised in that** the elastic layer (6) and/or the rigidification layer (10) comprises a protective sub-layer, such as a nonwoven fabric, of surface density between 15 and 200 g/m².

6. Screen set forth in claim 5, **characterised in that** the protective sub-layer of the elastic layer (6) has a resistance to the passage of air less than 1000 N.m⁻³.s.

7. Screen as set forth in any of claims 1 to 6, **characterised in that** the sealed layer (5) is of an EPDM or EVA base loaded with a mineral filler, de bitumen or metal material, said layer having a surface density between 50 and 10,000 g/m².

8. Screen as set forth in any of claims 1 to 7, **characterised in that** the elastic layer (6) is of a cotton or glass felt base of surface density between 400 and 1400 g/m² or of elastic foam with a density between 10 and 100 kg/m³.

9. Method for creating a screen (1) as set forth in any of the preceding claims, **characterised in that** it comprises the following steps:
- arrange in the matrix of a hot compression mould a sealed layer (5) covered with an elastic layer (6), with at least said elastic layer being brought to a temperature allowing it to conform to the geometry of the screen (1) to be obtained,
- create a compression of the whole in such a way as to form at least one support zone (7) having a dynamic elasticity module less than 1daN/cm²,
- after cooling, remove the screen (1) obtained from the mould.

10. Method set forth in claim 9, when it depends on claim 3, **characterised in that** it further comprises the step of arranging a rigidification layer (10) under the sealed layer (5), said rigidification layer being brought to a temperature hallowing it to conform to the geometry of the screen (1) to be obtained.

11. Method set forth in claim 10, **characterised in that** the sealed layer (5) is made flush via vacuum drawing against the rigidification layer (10) during the step of compression.

12. Vehicle comprising an engine (2) having an upper surface (4), a bonnet (3) and a screen (1) as set forth in any of claims 1 to 8, said screen being mounted in the vicinity of said engine and at a distance from said bonnet, said screen comprising at least one support zone of the elastic layer (6), of a dynamic elasticity module less than 1daN/cm², in contact with said upper surface and at least one spacing zone (9) of said elastic layer where said elastic layer is at a distance from said upper surface.

## Patentansprüche

1. Schallschutzschild (1), der dazu gedacht ist, auf der oberen Fläche (4) eines Motors (2) eines Kraftfahrzeugs in der Nähe des Motors und von der Motorhaube (3) des Fahrzeugs entfernt angeordnet zu werden, wobei der Schild mindestens eine dichte obere Schicht (5) umfasst, die an einer unteren elastischen Schicht (6) angeordnet ist, wobei die elastische Schicht mindestens einen Auflagebereich (7) umfasst, wobei der Schild **dadurch gekennzeichnet ist, dass** der Auflagebereich einen dynamischen Elastizitätsmodul von weniger als 1 daN/cm² aufweist, und wobei dass der Auflagebereich angeordnet ist, um auf mindestens einem Bereich der oberen Fläche (4) des Motors aufzuliegen.

2. Schild nach Anspruch 1, **dadurch gekennzeichnet, dass** er ferner mindestens eine Aufnahme (8) umfasst, die in der elastischen Schicht (6) gebildet wird, wobei die Aufnahme dazu gedacht ist, einen Abstandsbereich (9) zwischen der elastischen Schicht und der oberen Fläche (4) des Motors zu bilden.

3. Schild nach Anspruch 1 oder 2, **dadurch gekennzeichnet, dass** er ferner eine Versteifungsschicht (10) umfasst, die mit der dichten Schicht (5) gegenüber der elastischen Schicht (6) verbunden ist.

4. Schild nach Anspruch 3, **dadurch gekennzeichnet, dass** die Versteifungsschicht (10) auf Glas- oder Baumwollfilz basiert, mit einer flächenbezogenen Masse zwischen 400 und 1200 g/m² und einer Dicke zwischen 2 und 6 mm.

5. Schild nach einem der Ansprüche 1 bis 4, **dadurch gekennzeichnet, dass** die elastische Schicht (6) und/oder die Versteifungsschicht (10) eine Schutzunterlage umfasst, wie etwa ein Vlies, mit einer flächenbezogenen Masse zwischen 15 und 200 g/m².

6. Schild nach Anspruch 5, **dadurch gekennzeichnet, dass** die Schutzunterlage der elastischen Schicht (6) einen Luftdurchlasswiderstand von weniger als 1000 N.m⁻³.s aufweist.

7. Schild nach einem der Ansprüche 1 bis 6, **dadurch gekennzeichnet, dass** die dichte Schicht (5) auf EPDM oder EVA basiert, das mit einem mineralischen Füllstoff, einem Bitumenfüllstoff oder einem Metallfüllstoff gefüllt ist, wobei die Schicht eine flächenbezogene Masse zwischen 50 und 10 000 g/m² aufweist.

8. Schild nach einem der Ansprüche 1 bis 7, **dadurch gekennzeichnet, dass** die elastische Schicht (6) auf Glas-oder Baumwollfilz mit einer flächenbezogenen Masse zwischen 400 und 1400 g/m² oder auf einem elastischen Schaumstoff mit einer volumenbezogenen Masse zwischen 10 und 100 kg/m³ basiert.

9. Verfahren zum Herstellen eines Schilds (1) nach einem der vorhergehenden Ansprüche, **dadurch gekennzeichnet, dass** es folgende Schritte umfasst:
- Anordnen im Gesenk einer Warmpressform einer dichten Schicht (5), die mit einer elastischen Schicht (6) überzogen ist, wobei mindestens die elastische Schicht auf eine Temperatur gebracht wird, die ihre Formgebung gemäß der Geometrie des zu erhaltenden Schilds (1) ermöglicht,
- Ausführen einer Verdichtung der Anordnung, um mindestens einen Auflagebereich (7) zu bilden, der einen dynamischen Elastizitätsmodul von weniger als 1 daN/cm² aufweist,
- nach dem Abkühlen, Ausführen einer Ausformung des erhaltenen Schilds (1).

10. Verfahren nach Anspruch 9, in Abhängigkeit von Anspruch 3, **dadurch gekennzeichnet, dass** es ferner den Schritt des Anordnens einer Versteifungsschicht (10) unter der dichten Schicht (5) umfasst, wobei die Versteifungsschicht auf eine Temperatur gebracht wird, die ihre Formgebung gemäß der Geometrie des zu erhaltenden Schilds (1) ermöglicht.

11. Verfahren nach Anspruch 10, **dadurch gekennzeichnet, dass** die dichte Schicht (5) durch Vakuumziehen während des Verdichtungsschritts an die Versteifungsschicht (10) angedrückt wird.

12. Fahrzeug, umfassend einen Motor (2), der eine obere Fläche (4), eine Motorhaube (3) und einen Schild (1) nach einem der Ansprüche 1 bis 8 umfasst, wobei der Schild in der Nähe des Motors und von der Motorhaube entfernt angebracht ist, wobei der Schild mindestens einen Auflagebereich der elastischen Schicht (6) mit einem dynamischen Elastizitätsmodul von weniger als 1 daN/cm³ umfasst, der mit der oberen Fläche und mindestens einem Abstandsbereich (9) der elastischen Schicht in Berührung steht, wo die elastische Schicht von der oberen Fläche entfernt ist.
